# EUROPEAN PATENT APPLICATION

(11) **EP 4 451 138 A2**
(43) Date of publication of application: **23.10.2024**
(21) Application number: 24171319.7
(22) Date of filing: 19.04.2024
(51) Int. Cl.: G06F 16/22, G06F 16/2455

(54) **DATA PROCESSING METHOD, DEVICE, AND COMPUTER-READABLE STORAGE MEDIUM**

(30) Priority: 20.04.2023 CN 202310429904
(71) Applicant: YUSUR Technology Co., Ltd., Beijing 100094 (CN)
(72) Inventor: LI, Sheng, Beijing, 100094 (CN); GENG, Jia, Beijing, 100094 (CN); CHEN, Yan, Beijing, 100094 (CN); ZHANG, Yu, Beijing, 100094 (CN); YAN, Guihai, Beijing, 100094 (CN)
(74) Representative: Kraus & Lederer PartGmbB

(57) **Abstract**

The present disclosure relates to a data processing method, a device, and a computer-readable storage medium. The method includes: receiving input data transmitted by a central processing unit; performing a hash join operation on the input data to obtain a target operation result, and using the target operation result as output data; and transmitting the output data to the central processing unit. In the present disclosure, a hash join operation is performed on input data by using an accelerator card, that is, a computing capability is improved through a parallel operation, thereby improving data processing efficiency.

## Description

### TECHNICAL FIELD

The present disclosure relates to the field of computer technologies, and in particular, to a data processing method and apparatus, a device, and a computer-readable storage medium.

### BACKGROUND

A database is a key workload of artificial intelligence, cloud computing, big data processing, or the like. With rapid development of Internet technologies, the explosion of massive amounts of data has led to continually increasing performance demands on databases. With development of technologies, continuously improving disk read-write capability and network bandwidth performance have shifted a performance bottleneck to computing power.

In the related art, data is usually processed by using a central processing unit (CPU), and this processing method cannot provide enough computing power to support massive data services. Therefore, how to improve the computing power and further improve a data processing capability is an urgent problem to be resolved.

### SUMMARY

To resolve the foregoing technical problem or at least partially resolve the foregoing technical problem, the present disclosure provides a data processing method and apparatus, a device, and a computer-readable storage medium, to improve computing power and further improve a data processing capability.

According to a first aspect, an embodiment of the present disclosure provides a data processing method, including:
receiving input data transmitted by central processing unit;
performing a hash join operation on the input data to obtain a target operation result, and using the target operation result as output data; and
transmitting the output data to the central processing unit.

According to a second aspect, an embodiment of the present disclosure provides a data processing apparatus, including:
a receiving module, configured to receive input data transmitted by a central processing unit;
an operation module, configured to perform a hash join operation on the input data to obtain a target operation result, and use the target operation result as output data; and
a transmission module, configured to transmit the output data to the central processing unit.

According to a third aspect, an embodiment of the present disclosure provides an electronic device, including:
a memory;
a processor; and
a computer program, where
the computer program is stored in the memory, and is configured to be executed by the processor to implement the method according to the first aspect.

According to a fourth aspect, an embodiment of the present disclosure provides a computer-readable storage medium, on which a computer program is stored, where the computer program is executed by a processor to implement the method according to the first aspect.

According to a fifth aspect, an embodiment of the present disclosure further provides a computer program product, where the computer program product includes a computer program or instructions, and when the computer program or instructions are executed by a processor, the method according to the first aspect is implemented.

According to the data processing method and apparatus, the device, and the computer-readable storage medium provided in embodiments of the present disclosure, the input data transmitted by using the central processing unit is received, and the input data is transmitted to the accelerator card; the hash join operation is performed on the input data, that is, the computing power is improved by performing a parallel operation to ensure that the accelerator card processes the input data in real time to obtain the target operation result of the input data, and the target operation result is used as output data, thereby improving data processing efficiency; and the output data is transmitted to the central processing unit, so that the central processing unit obtains the output data, to facilitate the central processing unit to store and manage the output data, thereby improving a data management capability.

### BRIEF DESCRIPTION OF THE DRAWINGS

The accompanying drawings, which are incorporated herein and constitute a part of the specification, illustrate embodiments conforming to the present disclosure and are used together with the specification to explain principles of the present disclosure.

To describe the technical solutions in the embodiments of the present disclosure or in the related art more clearly, the following briefly describes the accompanying drawings for describing the embodiments or the related art. It is clear that a person of ordinary skill in the art may still derive other drawings from these accompanying drawings without creative efforts.
FIG. 1 is a flowchart of a data processing method according to an embodiment of the present disclosure;
FIG. 2 is a schematic diagram of an application scenario according to an embodiment of the present disclosure;
FIG. 3 is a schematic diagram of an application scenario according to an embodiment of the present disclosure;
FIG. 4 is a schematic diagram of input data according to an embodiment of the present disclosure;
FIG. 5 is a schematic diagram of a hash table according to an embodiment of the present disclosure;
FIG. 6 is a flowchart of a data processing method according to another embodiment of the present disclosure;
FIG. 7 is an architectural diagram of an accelerator core according to an embodiment of the present disclosure;
FIG. 8 is a schematic diagram of a structure of a data processing apparatus according to an embodiment of the present disclosure; and
FIG. 9 is a schematic diagram of a structure of an electronic device according to an embodiment of the present disclosure.

### DETAILED DESCRIPTION

To understand the foregoing objects, features, and advantages of the present disclosure more clearly, the following further describes the solutions of the present disclosure. It should be noted that, in a case of no conflict, the embodiment of the present disclosure and the features in the embodiments may be mutually combined.

Many specific details are described in the following descriptions to facilitate full understanding of the present disclosure, but the present disclosure may also be implemented in a manner different from that described herein. Apparently, the embodiments in the specification are only a part of embodiments of the present disclosure, not all of the embodiments.

A database is a key workload of artificial intelligence, cloud computing, big data processing, or the like. With rapid development of Internet technologies, the explosion of massive amounts of data has led to continually increasing performance demands on databases. With development of technologies, continuously improving disk read-write capability and network bandwidth performance have shifted a performance bottleneck to computing power.

In the related art, data is usually processed by using a central processing unit (CPU), and this processing method cannot provide enough computing power to support massive data services. Therefore, how to improve the computing force and further improve a data processing capability is an urgent problem to be resolved. For this problem, an embodiment of the present disclosure provides a data processing method. The following describes the method with reference to a specific embodiment.

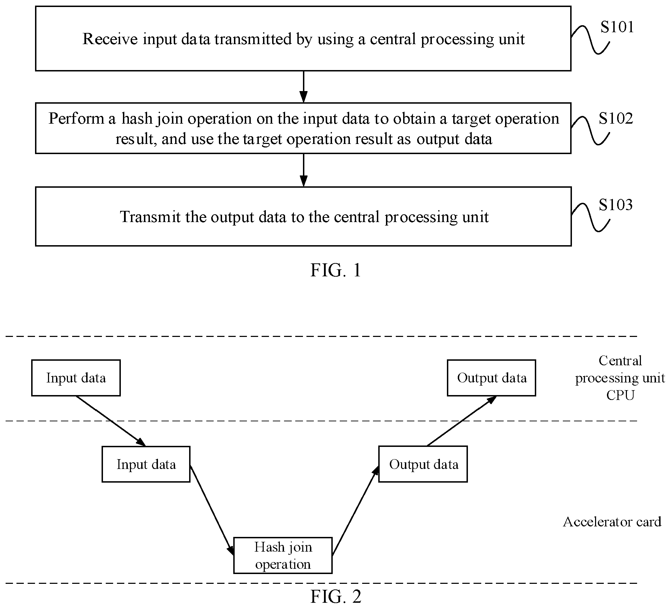

FIG. 1 is a flowchart of a data processing method according to an embodiment of the present disclosure. The method may be executed by a data processing apparatus. The data processing apparatus may be implemented in at least one of a software manner and a hardware manner. The data processing apparatus may be configured in an electronic device, such as a server or a terminal. The terminal specifically includes a mobile phone, a computer, a tablet computer, or the like. In addition, the method may be applied to an application scenario shown in FIG. 2, and the application scenario includes a central processing unit (Central Processing Unit, CPU) 21 and an accelerator card 22. It may be understood that the data processing method provided in this embodiment of the present disclosure may be further applied to another scenario.

The following describes the data processing method shown in FIG. 1 with reference to the application scenario shown in FIG. 2. For example, the accelerator card 22 in FIG. 2 may execute the method. Specific steps included in the method are as follows.

S 101. Receive input data transmitted by using a central processing unit.

A central processing unit (CPU) is used as an operation and control core of a computer system, and is a final execution unit for information processing and program running.

As shown in FIG. 2, after obtaining the input data, the CPU transmits the input data to the accelerator card, and the accelerator card receives the input data transmitted by using the CPU.

S102. Perform a hash join operation on the input data to obtain a target operation result, and use the target operation result as output data.

A hash join algorithm is used to perform a natural join or an equi-join operation. The concept behind the hash join algorithm is to partition tuples of each given relationship into sets. The partition is done based on a same hash value on a join attribute. A hash function provides a hash value. A main purpose of using the hash function in the algorithm is to reduce a quantity of comparisons and improve efficiency of completing a join operation on a relationship.

The accelerator card performs the hash j oin operation on the foregoing input data to obtain the target operation result, and uses the target operation result as the output data.

S 103. Transmit the output data to the central processing unit.

The accelerator card transmits the output data to the CPU, so that the CPU obtains the output data, and stores and manages the output data.

According to the embodiment of the present disclosure, the input data transmitted by using the central processing unit is received, and the input data is transmitted to the accelerator card; the hash join operation is performed on the input data, that is, the computing power is improved by performing a parallel operation to ensure that the accelerator card processes the input data in real time to obtain the target operation result of the input data, and the target operation result is used as output data, thereby improving data processing efficiency; and the output data is transmitted to the central processing unit, so that the central processing unit obtains the output data, to facilitate the central processing unit to store and manage the output data, thereby improving a data management capability.

In some embodiments, the input data and the output data are columnar data, and a form of the input data and the output data is an array form.

The input data and the output data are columnar data. Specifically, the input data and the output data may be one-dimensional deterministic data, such as Parquet. The form of the input data and the output data is the array form. Specifically, the form of the input data includes a data length of the input data, an operation operator type of the input data, and a data type of the input data. The form of the output data includes a data length of the output data, an operation operator type of the output data, and a data type of the output data.

Before the receiving input data transmitted by using a central processing unit, the method further includes: connecting to the central processing unit, where the central processing unit is configured to obtain the input data, and transmit the input data to an accelerator card.

PCIE belongs to high-speed serial point-to-point dual-channel high-bandwidth transmission, and a device connected to the PCIE allocates a dedicated channel bandwidth and does not share a bus bandwidth. The PCIE mainly supports functions such as active power management, error reporting, end-to-end reliability transmission, hot swap, and quality of service (QOS) such as a graphics card.

The accelerator card is inserted into a CPU server by using a standard peripheral component interconnect express (PCIE) slot, so that the accelerator card establishes a connection to the central processing unit. After obtaining the input data, the CPU transmits the input data to the accelerator card, and the accelerator card receives the input data transmitted by the CPU.

Optionally, the accelerator card includes an accelerator core and a memory, level 1 cache data is stored in the accelerator core, and the input data, the output data, and level 2 cache data are stored in the memory.

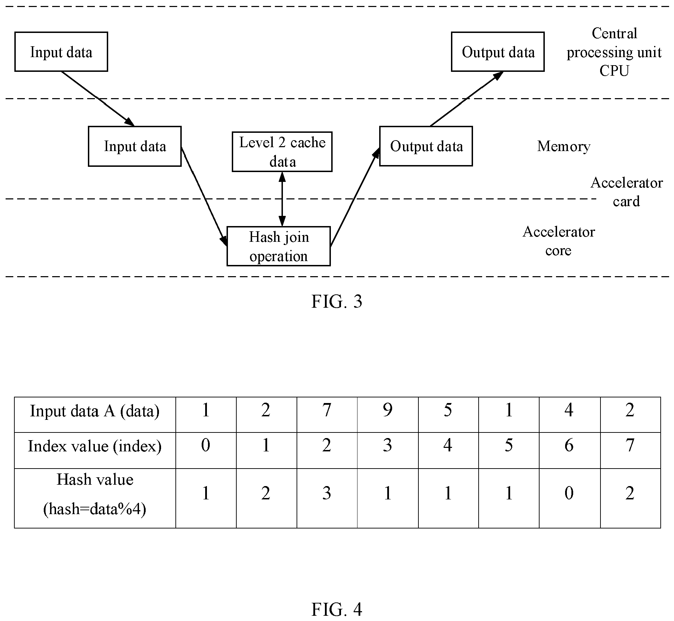

Specifically, as shown in FIG. 3, the accelerator card includes the accelerator core and the memory. Specifically, the memory may be a double-rate synchronous dynamic random access memory DDR, and the accelerator core may be a hash join core. The level 1 cache data is stored in the accelerator core, and the input data, the output data, and the level 2 cache data are stored in the memory DDR.

The performing a hash join operation on the input data to obtain a target operation result includes: reading, by the accelerator core, the input data from the memory; calculating a hash value of the input data and a quantity of the hash values; establishing a hash table based on the hash value and the quantity of the hash values; and performing the hash join operation on the input data based on the hash table, to obtain the target operation result.

Specifically, as shown in FIG. 3, after obtaining the input data, the CPU transmits the input data to the memory in the accelerator card; the memory receives the input data transmitted by using the CPU; and the accelerator core in the accelerator card reads the input data, calculates the hash value and the quantity of the hash values of the input data (the quantity of the hash values may also be referred to as a depth of a hash bucket), establishes a hash table based on the hash value and the quantity of the hash values, and performs the hash join operation on the input data based on the hash table, to obtain an intermediate operation result and the target operation result, where the intermediate operation result includes the level 1 cache data and the level 2 cache data, the level 1 cache data is stored in the accelerator core, the level 2 cache data is stored in the memory DDR, the target operation result is the output data, and the accelerator core sends the output data to the memory in the accelerator card, so that the CPU can obtain the output data by using the accelerator card.

Optionally, the calculating a hash value of the input data and a quantity of the hash values includes: calculating the hash value of the input data and the quantity of the hash values based on the input data and a parameter set.

Specifically, the parameter set is preset, and the hash value of the input data and the quantity of the hash values may be calculated based on the input data and the parameter set.

For example, as shown in FIG. 4, when the input data is [1, 2, 7, 9, 5, 1, 4, 2], an index value of the input data is [0, 1, 2, 3, 4, 5, 6, 7]. It is determined, based on the parameter set and the input data, that the quantity of the hash values is 4, and the hash value of the input data is calculated as [1, 2, 3, 1, 1, 1, 0, 2].

Optionally, the establishing a hash table based on the hash value and the quantity of the hash values includes: determining a level 1 cache depth and a level 2 cache depth of the input data based on the hash value and the quantity of the hash values, where the level 1 cache depth is a hash bucket corresponding to the cache data, and the level 2 cache depth is a hash bucket corresponding to overflow data; and establishing the hash table based on the hash value, the level 1 cache depth, and the level 2 cache depth.

Specifically, the level 1 cache depth and the level 2 cache depth of the input data are determined based on the input data, the hash value of the input data, and the index value of the input data, where the level 1 cache depth is a hash bucket corresponding to the level 1 cache data, the level 2 cache depth is a hash bucket corresponding to the level 2 cache data, and the level 2 cache data may also be referred to as overflow data; and the hash table is established based on the hash value, the level 1 cache depth, and the level 2 cache depth.

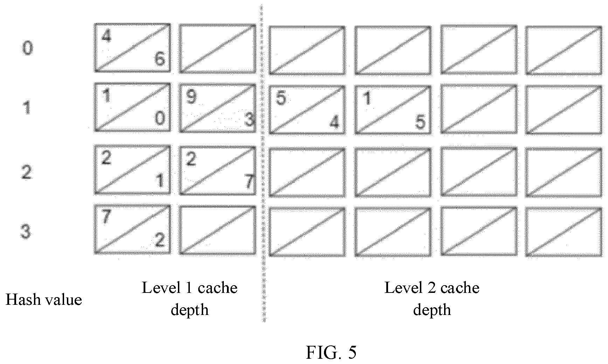

For example, when the input data is [1, 2, 7, 9, 5, 1, 4, 2] shown in FIG. 4, the hash table is established based on the hash value, the level 1 cache depth, and the level 2 cache depth of the input data. In the hash table shown in FIG. 5, the quantity of the hash values is 4, the level 1 cache depth is 2, and the level 2 cache depth is 4. A depth count of the input data, that is, a depth count of the hash bucket, is calculated based on the level 1 cache depth of the input data and the level 2 cache depth of the input data. Specifically, the depth count of the input data is a sum of the level 1 cache depth of the input data and the level 2 cache depth of the input data.

In this embodiment of the present disclosure, a computing capability is improved through a parallel operation of the accelerator card; pipeline processing is implemented in an accelerator card hardware logic instead of an instruction manner, to ensure that the accelerator core processes data in each clock cycle, that is, the accelerator core processes data in real time; and by combining a memory and a cache, acceleration performance of a system is improved without data overflow.

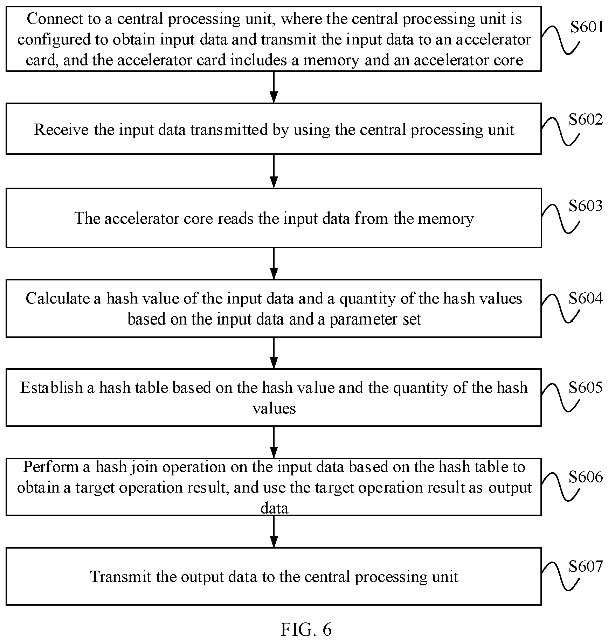

FIG. 6 is a flowchart of a data processing method according to another embodiment of the present disclosure. As shown in FIG. 6, the method includes the following steps.

S601. Connect to a central processing unit, where the central processing unit is configured to obtain input data and transmit the input data to an accelerator card, and the accelerator card includes an accelerator core and a memory.

The accelerator card is inserted into a CPU server by using a standard peripheral component interconnect express (PCIE) slot, so that the accelerator card establishes a connection to the central processing unit. After obtaining the input data, the CPU transmits the input data to the accelerator card, and the accelerator card receives the input data transmitted by the CPU. The accelerator card includes the accelerator core and the memory. Specifically, the memory may be a double-rate synchronous dynamic random access memory DDR, and the accelerator core may be a hash join core.

S602. Receive the input data transmitted by using the central processing unit.

After obtaining the input data, the CPU transmits the input data to the memory in the accelerator card, and the memory receives the input data transmitted by using the CPU.

S603. The accelerator core reads the input data from the memory.

The accelerator core in the accelerator card reads the input data from the memory.

S604. Calculate a hash value of the input data and a quantity of the hash values based on the input data and a parameter set.

The parameter set is preset, and the hash value of the input data and the quantity of the hash values may be calculated based on the input data and the parameter set.

For example, as shown in FIG. 4, when the input data is [1, 2, 7, 9, 5, 1, 4, 2], an index value of the input data is [0, 1, 2, 3, 4, 5, 6, 7]. It is determined, based on the parameter set and the input data, that the quantity of the hash values is 4, and the hash value of the input data is calculated as [1, 2, 3, 1, 1, 1, 0, 2].

S605. Establish a hash table based on the hash value and the quantity of the hash values.

Optionally, a level 1 cache depth and a level 2 cache depth of the input data are determined based on the hash value and the quantity of the hash values, where the level 1 cache depth is a hash bucket corresponding to the level 1 cache data, and the level 2 cache depth is a hash bucket corresponding to the level 2 cache data; and the hash table is established based on the hash value, the level 1 cache depth, and the level 2 cache depth.

Specifically, the level 1 cache depth and the level 2 cache depth of the input data are determined based on the input data, the hash value of the input data, and the index value of the input data, where the level 1 cache depth is a hash bucket corresponding to the level 1 cache data, the level 2 cache depth is a hash bucket corresponding to the level 2 cache data, and the level 2 cache data may also be referred to as overflow data; and the hash table is established based on the hash value, the level 1 cache depth, and the level 2 cache depth.

For example, when the input data is [1, 2, 7, 9, 5, 1, 4, 2] shown in FIG. 4, the hash table is established based on the hash value, the level 1 cache depth, and the level 2 cache depth of the input data. In the hash table shown in FIG. 5, the quantity of the hash values is 4, the level 1 cache depth is 2, and the level 2 cache depth is 4. A depth count of the input data, that is, a depth count of the hash bucket, is calculated based on the level 1 cache depth of the input data and the level 2 cache depth of the input data. Specifically, the depth count of the input data is a sum of the level 1 cache depth of the input data and the level 2 cache depth of the input data.

S606. Perform a hash join operation on the input data based on the hash table to obtain a target operation result, and use the target operation result as output data.

The hash join operation is performed on the input data based on the hash table, to obtain an intermediate operation result and the target operation result, where the intermediate operation result includes the level 1 cache data and the level 2 cache data, the level 1 cache data is stored in the accelerator core, the level 2 cache data is stored in the memory DDR, the target operation result is obtained through calculation based on the input data, the level 1 cache data, and the level 2 cache data, the target operation result is the output data, and the accelerator core sends the output data to the memory in the accelerator card.

S607. Transmit the output data to the central processing unit.

With increasing demand for computing power in the industry, more computing platforms begin to introduce various different computing units such as a CPU, a GPU, an ASIC, and an FPGA to perform accelerated computing. Therefore, heterogeneous computing emerges. The core of heterogeneous computing lies in the term "heterogeneous". Simply put, it involves combining hardware of different process architectures, different instruction sets, and different functions to enhance computing power, for example, chip-level (SoC) heterogeneous computing, board-level integrated heterogeneous computing, and system-level heterogeneous computing.

The memory transmits the output data to the central processing unit by using the PCIE slot, so that the CPU obtains the output data, then completes heterogeneous computing, and stores and manages the output data.

According to the embodiment of the present disclosure, the input data transmitted by using the central processing unit is received, and the input data is transmitted to the accelerator card; the hash join operation is performed on the input data, that is, the computing power is improved by performing a parallel operation to ensure that the accelerator card processes the input data in real time to obtain the target operation result of the input data, and the target operation result is used as output data, thereby improving data processing efficiency; and the output data is transmitted to the central processing unit, so that the central processing unit obtains the output data, to facilitate the central processing unit to store and manage the output data, thereby improving a data management capability.

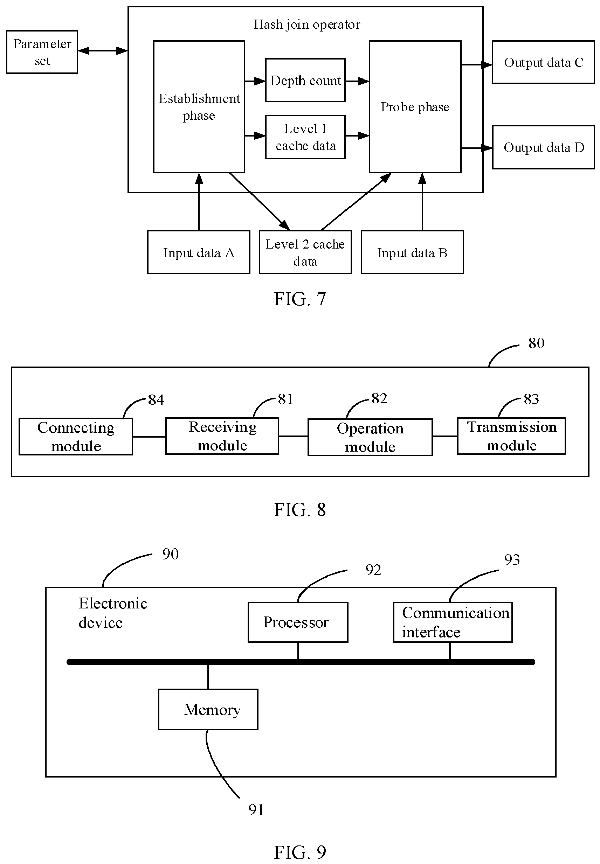

FIG. 7 is an architectural diagram of an accelerator core according to an embodiment of the present disclosure. As shown in FIG. 7, a hash join operator includes input data A, input data B, a parameter set, level 2 cache data, output data C, and output data D, where the input data A, the input data B, the output data C, and the output data D are all columnar data, which may specifically be one-dimensional columnar data such as Puaquet; the level 2 cache data is a hash table of a two-dimensional data structure, and may be indexed by using a hash value; and the parameter set includes a data length and an operation operator.

The hash join operation of the accelerator core is divided into two phases: an establishment phase and a probe phase.

In the establishment phase, a hash value and a quantity of hash values are calculated based on the input data A and the parameter set, where the quantity of the hash values is a depth of a hash bucket, the input data A and an index number of the input data A are written into a hash table based on the hash value, the hash table is stored in level 1 cache data and the level 2 cache data, and when a hash bucket corresponding to the level 1 cache data is full, the hash table is overflowed into the level 2 cache data for storage. In addition, a depth count records a depth of the hash bucket corresponding to the level 1 cache data and a depth of a hash bucket corresponding to the level 2 cache data, that is, a level 1 cache depth and a level 2 cache depth. The level 1 cache data and the level 2 cache data have a same data structure. Generally, a capacity of an accelerator core processor is less than a capacity of a memory, and a memory access speed of the accelerator core processor is faster than a memory access speed of the memory. A purpose of the level 2 cache data is to prevent a hash bucket from overflowing. The performance advantage of the level 2 cache data is better if the hash table does not overflow to the level 2 cache data.

In the probe phase: a hash value is calculated based on the input data B, the level 1 cache data, and the level 2 cache data, a depth count is queried based on the hash value; when a depth count value is greater than 0, the input data A and an index number thereof and the input data B and an index number thereof are obtained from the level 1 cache data and the level 2 cache data; and if the output data is equal to the input data, the index number of the input data A is output to the output data C, and the index number of the input data B is output to the output data D.

For example, the input data A is: [1, 2, 7, 9, 5, 1, 4, 2], the input data B is: [3, 5, 1, 10, 3, 1], and the quantity of the hash values is determined to be 4 based on the input data A and the parameter set, the level 1 cache depth is 2, and the level 2 cache depth is 4; and a hash join algorithm is selected as hash=data%4. In this case, the hash table generated in the establishment phase is shown in FIG. 5, each row is a hash bucket corresponding to a hash value, and a hash value is calculated for the input data A and is then put into a corresponding hash bucket; each rectangular frame represents a storage location; a value of the upper left corner is input data, and a value of the lower right corner is an index value in an array, for example, a hash bucket corresponding to a hash value 0 is 1, a hash bucket corresponding to a hash value 1 is 4, a hash value corresponding to a hash value 2 is 2, and a hash value corresponding to a hash value 3 is 1, where for the hash bucket corresponding to the second row (that is, the hash value 1), after a level 1 cache is full, new data is overflowed to a level 2 cache for storage. The input data A obtains a structure in the hash table through the establishment phase, and an array result is obtained through depth calculation, corresponding to the depth of each hash bucket: [1, 4, 2, and 1]. In the probe phase, the hash value is calculated based on the input data B, the level 1 cache data, and the level 2 cache data, and a matching result is searched for in the hash table to obtain the output data C: [4, 0, 5, 0, 5] corresponding to the input data A and the output data D: [1, 2, 2, 5, 5] corresponding to the input data B.

FIG. 8 is a schematic diagram of a structure of a data processing apparatus according to an embodiment of the present disclosure. The data processing apparatus may be the terminal described in the foregoing embodiment, or the data processing apparatus may be a component or an assembly in the terminal. The data processing apparatus provided in this embodiment of the present disclosure may execute the processing procedure provided in the embodiment of the data processing method. As shown in FIG. 8, the data processing apparatus 80 includes a receiving module 81, an operation module 82, and a transmission module 83. The receiving module 81 is configured to receive input data transmitted by using a central processing unit; the operation module 82 is configured to perform a hash join operation on the input data to obtain a target operation result, and use the target operation result as output data; and the transmission module 83 is configured to transmit the output data to the central processing unit.

Optionally, the input data and the output data are columnar data, and a form of the input data and the output data is an array form.

Optionally, the data processing apparatus 80 further includes: a connecting module 84, configured to connect to the central processing unit, where the central processing unit is configured to obtain the input data, and transmit the input data to an accelerator card.

Optionally, the accelerator card includes an accelerator core and a memory, level 1 cache data is stored in the accelerator core, and the input data, the output data, and level 2 cache data are stored in the memory.

Optionally, the operation module 82 is further configured to: read the input data from the memory by the accelerator core; calculate a hash value of the input data and a quantity of the hash values; establish a hash table based on the hash value and the quantity of the hash values; and perform the hash join operation on the input data based on the hash table, to obtain the target operation result.

Optionally, the operation module 82 is further configured to calculate the hash value of the input data and the quantity of the hash values based on the input data and a parameter set.

Optionally, the operation module 82 is further configured to: determine a level 1 cache depth and a level 2 cache depth of the input data based on the hash value and the quantity of the hash values, where the level 1 cache depth is a hash bucket corresponding to the level 1 cache data, and the level 2 cache depth is a hash bucket corresponding to the level 2 cache data; and establish the hash table based on the hash value, the level 1 cache depth, and the level 2 cache depth.

The data processing apparatus in the embodiment shown in FIG. 8 may be configured to execute the technical solution in the embodiment of the foregoing data processing method, an implementation principle and technical effects of the data processing apparatus are similar to those of the data processing method, and details are not described herein again.

FIG. 9 is a schematic diagram of a structure of an electronic device according to an embodiment of the present disclosure. The electronic device may be the terminal described in the foregoing embodiments. The electronic device provided in this embodiment of the present disclosure may execute the processing procedure provided in the embodiment of the data processing method. As shown in FIG. 7, the electronic device 70 includes: a memory 71, a processor 72, a computer program, and a communication interface 73, where the computer program is stored in the memory 71, and is configured to be executed by the processor 72 to perform the foregoing data processing method.

In addition, an embodiment of the present disclosure further provides a computer-readable storage medium, on which a computer program is stored, where the computer program is executed by a processor to implement the data processing method according to the foregoing embodiment.

In addition, an embodiment of the present disclosure further provides a computer program product, where the computer program product includes a computer program or instructions, and when the computer program or instructions are executed by a processor, the foregoing data processing method is implemented.

It should be noted that the foregoing computer-readable medium in the present disclosure may be a computer-readable signal medium, a computer-readable storage medium, or any combination of the two. The computer-readable storage medium may be but is not limited to, for example, an electrical, a magnetic, an optical, an electromagnetic, an infrared, or a semiconductor system, apparatus, or device, or any combination thereof. A more specific example of the computer-readable storage medium may include but is not limited to: an electrical connection having one or more conducting wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In this disclosure, the computer-readable storage medium may be any tangible medium that includes or stores a program, and the program may be used by or used in combination with an instruction execution system, apparatus, or component. In this disclosure, the computer-readable signal medium may include a data signal propagated in a baseband or propagated as a part of a carrier, and carries computer-readable program code. The transmitted data signal may be in a plurality of forms, including but not limited to an electromagnetic signal, an optical signal, or any suitable combination of the foregoing. The computer-readable signal medium may alternatively be any computer-readable medium other than the computer-readable storage medium, and the computer-readable signal medium may send, propagate, or transmit a program that is used by or used in combination with the instruction execution system, apparatus, or component. The program code included in the computer-readable medium may be transmitted by using any suitable medium, including but not limited to: a wire, an optical cable, an RF (radio frequency), or any suitable combination of the foregoing.

In some implementations, a client and a server may communicate using any currently known or future developed network protocol, such as HTTP (HyperText Transfer Protocol), and may be communicatively interconnected with digital data in any form or of any medium (for example, a communication network). Examples of the communication network include a local area network ("LAN"), a wide area network ("WAN"), an internetwork (for example, the Internet), an end-to-end network (for example, a ad hoc end-to-end network), and any network currently known or developed in the future.

The foregoing computer-readable medium may be included in the foregoing electronic device, or may exist separately and is not assembled into the electronic device.

The computer-readable medium carries one or more programs, and when the one or more programs are executed by the electronic device, the electronic device is enabled to:

receive input data transmitted by using a central processing unit;

perform a hash join operation on the input data to obtain a target operation result, and use the target operation result as output data; and

transmit the output data to the central processing unit.

In addition, the electronic device may further perform another step in the foregoing data processing method.

Computer program code for executing the operations of this disclosure may be written in one or more programming languages or a combination thereof, where the programming languages include but are not limited to object-oriented programming languages such as Java, Smalltalk, and C++, and further include conventional programming languages such as "C" language or a similar programming language. The program code may be completely or partially executed on a user computer, executed as an independent software package, partially executed on a user computer and partially executed on a remote computer, or completely executed on a remote computer or server. In a case involving a remote computer, the remote computer may be connected to a user computer through any type of network, including a local area network (LAN) or a wide area network (WAN), or may be connected to an external computer (for example, via the Internet provided by an Internet service provider).

Flowcharts and block diagrams in the accompanying drawings illustrate possible system architectures, functions, and operations of the systems, methods, and computer program products according to the embodiments of the present disclosure. In this regard, each block in a flowchart or block diagram may represent a module, program segment, or part of code, where the module, program segment, or part of code includes one or more executable instructions for implementing a specified logical function. It should also be noted that in some alternative implementations, functions marked in blocks may also occur in a sequence different from that marked in the accompanying drawings. For example, two blocks represented in succession may actually be executed in a basically parallel manner, and sometimes they may also be executed in a reverse sequence, depending on functions involved. It should also be noted that at least one of a block diagram, each block in a flowchart, and a combination of the block diagram and the block in the flowchart may be implemented by using a dedicated hardware-based system that performs a specified function or operation, or may be implemented by using a combination of dedicated hardware and computer instructions.

The units described in the embodiments of the present disclosure may be implemented in a software manner, or may be implemented in a hardware manner. In some cases, a name of a unit does not constitute a limitation on the unit.

The foregoing described functions in this specification may be executed at least in part by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium, and may include or store a program used by or used in combination with an instruction execution system, apparatus, or device. The machine-readable medium may be a machine-readable signal medium or a machine-readable storage medium. The machine-readable medium may include but is not limited to an electronic, a magnetic, an optical, an electromagnetic, an infrared, or a semiconductor system, apparatus, or device, or any suitable combination of the foregoing contents. A more specific example of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

It should be noted that in this specification, relational terms such as "first" and "second" are merely used to distinguish one entity or operation from another entity or operation, and does not necessarily require or imply that any such actual relationship or sequence exists between these entities or operations. In addition, the term "include", "contain", or any other variation thereof is intended to cover non-exclusive inclusion, so that a process, method, article, or device that includes a series of elements not only includes those elements, but also includes other elements not explicitly listed, or also includes elements inherent to such process, method, article, or device. Without further restrictions, an element defined by a statement "including one... " does not exclude existence of other identical elements in the process, method, article, or device that includes the element.

The foregoing descriptions are merely specific implementations of the present disclosure, so that a person skilled in the art can understand or implement the present disclosure. Various modifications to these embodiments will be apparent to a person skilled in the art. General principles defined in this specification may be implemented in another embodiment without departing from the spirit or scope of this disclosure. Therefore, the present disclosure will not be limited to these embodiments described herein, but is intended to conform to the widest scope consistent with the principles and novel features disclosed herein.

## Claims

1. A data processing method, comprising:
receiving input data transmitted by a central processing unit;
performing a hash join operation on the input data to obtain a target operation result, and using the target operation result as output data; and
transmitting the output data to the central processing unit.

2. The method according to claim 1, wherein the input data and the output data are columnar data, and the input data and the output data are in the form of an array.

3. The method according to claim 2, wherein before the receiving input data transmitted by a central processing unit, the method further comprises:
connecting to the central processing unit, wherein the central processing unit is configured to obtain the input data, and transmit the input data to an accelerator card.

4. The method according to claim 3, wherein the accelerator card comprises an accelerator core and a memory, level 1 cache data is stored in the accelerator core, and the input data, the output data, and level 2 cache data are stored in the memory.

5. The method according to claim 4, wherein the performing a hash join operation on the input data to obtain a target operation result comprises:
reading, by the accelerator core, the input data from the memory;
calculating a hash value of the input data and a quantity of the hash values;
establishing a hash table based on the hash value and the quantity of the hash values; and
performing the hash join operation on the input data based on the hash table, to obtain the target operation result.

6. The method according to claim 5, wherein the calculating a hash value of the input data and a quantity of the hash values comprises:
calculating the hash value of the input data and the quantity of the hash values based on the input data and a parameter set.

7. The method according to claim 5 or 6, wherein the establishing a hash table based on the hash value and the quantity of the hash values comprises:
determining a level 1 cache depth and a level 2 cache depth of the input data based on the hash value and the quantity of the hash values, wherein the level 1 cache depth is a hash bucket corresponding to the level 1 cache data, and the level 2 cache depth is a hash bucket corresponding to the level 2 cache data; and
establishing the hash table based on the hash value, the level 1 cache depth, and the level 2 cache depth.

8. A electronic device, comprising:
a memory;
a processor; and
a computer program, wherein
the computer program is stored in the memory, and is configured to be executed by the processor to implement the method according to any one of claims 1 to 7.

9. A computer-readable storage medium, on which a computer program is stored, wherein the computer program is executed by a processor to implement the method according to any one of claims 1 to 7.
